(19) Europäisches Patentamt
European Patent Office
Office européen des brevets

(11) EP 3 196 564 B1

(12) # EUROPEAN PATENT SPECIFICATION

(45) Date of publication and mention of the grant of the patent:
**04.11.2020 Bulletin 2020/45**

(21) Application number: **15852619.4**

(22) Date of filing: **26.01.2015**

(51) Int Cl.:
***F24F 11/30*** *(2018.01)*
***F24F 11/00*** *(2018.01)*
***F24F 11/62*** *(2018.01)*
***F24F 110/40*** *(2018.01)*
***G05B 19/042*** *(2006.01)*
***F25B 49/02*** *(2006.01)*
***G05B 23/02*** *(2006.01)*
***F24F 110/00*** *(2018.01)*
***F24F 140/20*** *(2018.01)*

(86) International application number:
**PCT/JP2015/052030**

(87) International publication number:
**WO 2016/063552 (28.04.2016 Gazette 2016/17)**

(54) **CONTROL DEVICE FOR AIR CONDITIONING SYSTEM, AIR CONDITIONING SYSTEM, AND METHOD FOR DETERMINING ANOMALY OF AIR CONDITIONING SYSTEM**

STEUERUNGSVORRICHTUNG FÜR EIN KLIMATISIERUNGSSYSTEM, KLIMATISIERUNGSSYSTEM UND VERFAHREN ZUR BESTIMMUNG VON ANOMALIEN EINES KLIMATISIERUNGSSYSTEMS

DISPOSITIF DE COMMANDE POUR SYSTÈME DE CONDITIONNEMENT DE L'AIR, SYSTÈME DE CONDITIONNEMENT DE L'AIR, ET PROCÉDÉ DE DÉTERMINATION D'ANOMALIE DE SYSTÈME DE CONDITIONNEMENT DE L'AIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2014 JP 2014217459**

(43) Date of publication of application:
**26.07.2017 Bulletin 2017/30**

(73) Proprietor: **Mitsubishi Heavy Industries, Ltd.**
**Tokyo 108-8215 (JP)**

(72) Inventors:
- **ENYA, Atsushi**
  **Tokyo 108-8215 (JP)**
- **ITO, Takahide**
  **Tokyo 108-8215 (JP)**
- **MATSUO, Minoru**
  **Tokyo 108-8215 (JP)**

(74) Representative: **Cabinet Beau de Loménie**
**158, rue de l'Université**
**75340 Paris Cedex 07 (FR)**

(56) References cited:
**EP-A1- 0 706 015**
**JP-A- H04 106 350**
**JP-A- H05 296 524**
**JP-A- 2001 255 046**
**JP-A- 2002 349 940**
**JP-A- 2006 038 363**
**JP-A- 2012 127 603**
**JP-A- 2012 127 603**
**JP-A- 2013 139 924**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a control device for an air conditioning system, an air conditioning system, and a method for determining an anomaly of an air conditioning system. Background Art

Makers acquire operating data of an air conditioning system through remote monitoring, and perform proposal for energy saving to customers, determination of the presence or absence of a need for maintenance, and the like, for example, in related-art air conditioning systems, as part of maintenance.

In the related-art air conditioning systems that control an outdoor unit and an indoor unit using different control devices, respectively, the outdoor unit and the indoor unit are operated by different control programs. Therefore, it is difficult to accurately ascertain an operating state of an air conditioning system.

Thus, NPL 1 discloses an air-conditioning remote monitoring system in which a local server installed within a customer's building periodically transmits operating data of an air conditioner to an air-conditioning remote monitoring center server through the Internet, and the operating data that the center server has received are displayed on a monitoring screen of an air-conditioning remote monitoring center. In this air-conditioning remote monitoring system, main data (pressure value, refrigerant temperature, the rotational speed of a fan, the operation time of a compressor, the rotational speed of the compressor, the number of times of starting and stopping of the compressor, and the like) of the air conditioner are transmitted at regular intervals to the center server.

Then, in a case where an anomaly has occurred, a malfunction site showing the anomaly is specified on the basis of the operating data transmitted to the center server, and a maker carries out a contact with the service center and a request for repair.

### Citation List

NPL 1: TOSHIBA REVIEW Vol. 60, No.6 (2005), Pages.52 to 55

JP 2002 349940 relates to an air-conditioning system with a control device according to the preamble of claim 1.

### Summary of Invention

### Technical Problem

However, in an area where external network environment, such as the Internet, is insufficient, it is difficult to install the air-conditioning remote monitoring center server. Additionally, high costs are required also for the installation of the air-conditioning remote monitoring center server.

Moreover, if the indoor unit and the outdoor unit manufactured by different makers are used for the air conditioning system, it is necessary to determine whether or not machinery (also referred to as functional components) installed in these units is operating correctly as the air conditioning system. Unless this determination is performed, the cause of an anomaly of the air conditioning system cannot be made clear, and a maker who has the responsibility for the anomaly cannot be clarified.

The invention has been made in view of such circumstances, and an object thereof is to provide a control device for an air conditioning system, an air conditioning system, and a method for determining an anomaly of an air conditioning system that can simply and accurately ascertain an operating state of the air conditioning system more.

### Solution to Problem

In order to solve the above problem, a control device for an air conditioning system, an air conditioning system, and a method for determining an anomaly of an air conditioning system in the invention adopts the following means.

A control device for an air conditioning system related to a first aspect of the invention is a control device for an air conditioning system including one or a plurality of outdoor units and one or a plurality of indoor units. The control device includes outdoor-unit control means which is capable of communicating with the outdoor unit through a communication medium, the outdoor-unit control means is configured to acquire, through the communication medium, information about machinery installed in the outdoor unit and outputting a control command to the machinery installed in the outdoor unit; indoor-unit control means which is capable of communicating with the indoor unit through the communication medium, the indoor-unit control means is configured to acquire, through the communication medium, information about machinery installed in the indoor unit and output a control command to the machinery installed in the indoor unit; and anomaly determination means for determining the presence or absence of an anomaly in the machinery by being configured to individually change an operating point of the machinery installed in the outdoor unit or the indoor unit and acquire a predetermined state quantity before and after the change.

In the control device for an air conditioning system related to this configuration, the outdoor-unit control means that outputs the control command to the machinery installed in the outdoor unit, and the indoor-unit control means that outputs the control command to the machinery installed in the indoor unit are virtually loaded. The machinery installed in the outdoor unit or the indoor unit is, for example, an expansion valve, a fan, and a four-way valve.

That is, since the indoor-unit control means and the outdoor-unit control means are present independently from the indoor unit and the outdoor unit, the configurations of the indoor unit and the outdoor unit are simplified. Moreover, for example, like installation for only communication and actuator functions of components, it is not necessary to load advanced programs into the indoor unit and the outdoor unit, and replacement of the indoor unit and the outdoor unit can be easily performed. In addition, as long as the indoor unit or the outdoor unit satisfies specification, the indoor unit and the outdoor unit manufactured by a maker different from that of the control device may be adopted.

Here, in the related-art air conditioning systems that control the outdoor unit and the indoor unit using the different control devices, respectively, the outdoor unit and the indoor unit are operated by different control programs. Therefore, it is difficult to accurately ascertain the operating state including the presence or absence of an anomaly of the overall air conditioning system. For this reason, in the related-art air conditioning systems, it is necessary to collect and manage data, such as the operating state and various state quantities of the air conditioning system, using a server or the like for remote monitoring.

Moreover, if the indoor unit and the outdoor unit manufactured by different makers are used for the air conditioning system, it is necessary to determine whether or not the machinery installed in these units is operating correctly as the air conditioning system.

Thus, in the control device of the air conditioning system related to this configuration, the presence or absence of an anomaly in the machinery is determined by the anomaly determination means by acquiring the predetermined state quantity before and after the operating point of the machinery installed in the outdoor unit or the indoor unit is individually changed. That is, the control device performs active monitoring control for positively operating the machinery. The state quantities are, for example, the temperature of the refrigerant, the pressure of the refrigerant, the flow rate of the refrigerant, and the like.

The influence that the machinery has on the air conditioning system can be clarified by individually changing the operating point of the machinery installed in the indoor unit or the outdoor unit, and acquiring the state quantity before and after the change. Then, in a case where the influence is not proper, a possibility or the like that the machinery has an anomaly (malfunction or the like) can be considered.

Additionally, in the air conditioning system related to this configuration, one control device controls the indoor unit and the outdoor unit. Thus, the control states of the respective pieces of machinery, the various state quantities in the air conditioning system, and the like can be managed by the control device. For this reason, association between timings at which the operating points of the machinery are changed individually, and changes in the state quantities before and after the timings is easy. That is, in this configuration, the operating state of the air conditioning system can be ascertained simply and accurately without using the server for remote monitoring like the related-art air conditioning systems.

Additionally, in this configuration, even if the indoor unit and the outdoor unit manufactured by different makers are used, the presence or absence of an anomaly is determined by acquiring the predetermined state quantity before and after the operating point of the machinery installed in these units are changed individually. Thus, it is possible to accurately ascertain the influence that the operation of the machinery has on the air conditioning system.

As described above, one control device controls the indoor unit and the outdoor unit, individually changes the operating point of the machinery installed in the indoor unit or the outdoor unit, and acquires the predetermined state quantity before and after the change. Thus, the operating state of the air conditioning system can be ascertained more simply and accurately.

In the above first aspect, the anomaly determination means may be configured to acquire the predetermined state quantity that is the earliest reaction or only reaction to the change in the operating point of the machinery, and may determine the presence or absence of an anomaly in the machinery.

According to this configuration, the presence or absence of an anomaly in the machinery is determined on the basis of only the predetermined state quantity that fluctuates more easily in a case where the operating point of the machinery is changed. Thus, the operating state of the air conditioning system can be determined earlier.

In the above first aspect, the anomaly determination means may be configured to determine the presence or absence of an anomaly of the machinery by changing, in order and one by one, the operating point of the machinery of the plurality of indoor units and the plurality of outdoor units.

According to this configuration, the state of the outdoor unit or the indoor unit can be determined more exactly.

In the above first aspect, the anomaly determination means may be configured to determine the presence or absence of an anomaly of the machinery during the operation of the air conditioning system.

According to this configuration, the operating point of the machinery are changed in a short time. Thus, even if the outdoor unit or the indoor unit is operating, the presence or absence of an anomaly can be determined without impairing a user's temperature adjustment sensation.

In the above first aspect, the amount of a refrigerant within the air conditioning system may be calculated by multiplying refrigerant density, which is calculated on the basis of the state quantity during the operation of the air conditioning system, by an internal volume of the air conditioning system.

According to this configuration, the presence or absence of leakage of the refrigerant can be detected, on the basis of a time change in the flow rate of the refrigerant.

An air conditioning system related to a second aspect of the invention includes one or a plurality of outdoor units; one or a plurality of indoor units; and the control device described in the above.

A method for determining an anomaly of an air conditioning system related to a third aspect of the invention is a method for determining an anomaly of an air conditioning system including one or a plurality of outdoor units and one or a plurality of indoor units, outdoor-unit control means which is capable of communication with the outdoor unit through a communication medium, the outdoor-unit control means being configured to acquire, through the communication medium, information about machinery installed in the outdoor unit and output a control command to the machinery installed in the outdoor unit, and indoor-unit control means which is capable of communication with the indoor unit through the communication medium, the indoor-unit control means being configured to acquire, through the communication medium, information about machinery installed in the indoor unit and output a control command to the machinery installed in the indoor unit. The method includes individually changing an operating point of the machinery installed in the outdoor unit or the indoor unit; acquiring a predetermined state quantity before and after the change; and determining the presence or absence of an anomaly in the machinery.

## Advantageous Effects of Invention

According to the invention, an excellent effect that the operating state of the air conditioning system can be ascertained more simply and accurately is exhibited.

## Brief Description of Drawings

Fig. 1 is a view illustrating a refrigerant system of an air conditioning system related to an embodiment of the invention.
Fig. 2 is an electrical configuration diagram of the air conditioning system related to the embodiment of the invention.
Fig. 3 is a functional block diagram of a malfunction prediction control part related to the embodiment of the invention.
Fig. 4 is a flowchart illustrating a flow of malfunction prediction processing related to the embodiment of the invention.
Fig. 5A is a flowchart illustrating a flow of malfunction prediction operation related to the embodiment of the invention.
Fig. 5B is a flowchart illustrating the flow of the malfunction prediction operation related to the embodiment of the invention.
Fig. 6 is a flowchart illustrating a flow of refrigerant amount determination processing related to the embodiment of the invention.

## Description of Embodiments

Hereinbelow, an embodiment of a control device of the air conditioning system, an air conditioning system, and an anomaly determination method for an air conditioning system related to the invention will be described with reference to the drawings.

Fig. 1 is a view illustrating a refrigerant system of an air conditioning system 1 related to the present embodiment. As illustrated in Fig. 1, the air conditioning system 1 includes one outdoor unit B, and a plurality of indoor units A1 and A2 connected to the outdoor unit B by a common refrigerant line 10. Although a configuration in which two indoor units A1 and A2 are connected to one outdoor unit B is illustrated for convenience in Fig. 1, the number of outdoor units B to be installed and the number of indoor units A1 and A2 to be connected are not limited.

The outdoor unit B includes, for example, a compressor 11 that compresses and delivers a refrigerant, a four-way valve 12 that switches a circulation direction of a refrigerant, an outdoor heat exchanger 13 that performs heat exchange between a refrigerant and ambient air, an outdoor fan 15, an accumulator 16 that is provided on a suction-side pipe of the compressor 11 from the purpose of gas-liquid separation or the like of a refrigerant, an outdoor-unit expansion valve 17 that is, for example, an electronic expansion valve, and the like. Additionally, the outdoor unit B is provided with various sensors 20 (refer to Fig. 2), such as pressure sensors 21 (a high-pressure sensor 21_1 and a low-pressure sensor 21_2) that measure refrigerant pressures, an outdoor temperature sensor 24 that measures refrigerant temperature. In addition, the high-pressure sensor 21_1 measures the pressure of the refrigerant discharged from the compressor 11, and the low-pressure sensor 21_2 measures the pressure of the refrigerant sent to the compressor 11.

The indoor units A1 and A2 include an indoor heat exchanger 31, an indoor fan 32, an indoor-unit expansion valve 33, and the like, respectively. The two indoor units A1 and A2 are respectively connected to respective refrigerant lines 10 that branch at a header 22 and a distributor 23 within the outdoor unit B.

An indoor temperature sensor 35_1 measures the inlet refrigerant temperature of the indoor heat exchanger 31, an indoor temperature sensor 35_2 measures the intermediate refrigerant temperature of the indoor heat exchanger 31, and the indoor temperature sensor 35_3 measures the outlet refrigerant temperature of the indoor heat exchanger 31.

Fig. 2 is an electrical configuration diagram of the air conditioning system 1 related to the present embodiment. As illustrated in Fig. 2, the indoor units A1 and A2, the outdoor unit B, and a control device 3 are connected together through a common bus 5, and are configured to be capable of mutually transferring information. In addition, the common bus 5 is an example of a communication medium, and communication can be wireless or wired.

The control device 3 is connected to a maintenance inspection device 6 that performs maintenance inspection through a communication medium 7, and is configured to be capable of periodically transmitting operating data, or at the time of occurrence of the anomaly, rapidly notifying the maintenance inspection device of the effect.

Here, in a related-art air conditioning systems, control devices are provided inside an indoor unit and an outdoor unit, respectively. In contrast, in the present embodiment, respective indoor-unit control parts 41_1 and 41_2 and an outdoor-unit control part 43 are provided independently from the indoor units A1 and A2 and the outdoor unit B. Specifically, the indoor-unit control part 41_1 that controls the indoor unit A1, the indoor-unit control part 41_2 that controls the indoor unit A2, and the outdoor-unit control part 43 that controls the outdoor unit B are mounted on the control device 3 serving as a virtualized control part.

That is, since the indoor-unit control parts 41 and the outdoor-unit control part 43 are present independently from the indoor units A and the outdoor unit B, the configurations of the indoor units A and the outdoor unit B are simplified. Moreover, for example, like installation for only communication and actuator functions of components, it is not necessary to load advanced programs into the indoor units A and the outdoor unit B, and replacement of the indoor units A and the outdoor unit B can be easily performed. In addition, as long as the indoor units A1 and A2 or the outdoor unit B satisfies specification, the indoor units A and the outdoor unit B manufactured by a maker different from that of the control device 3 may be adopted.

That is, the indoor-unit control parts 41_1 and 41_2 and the outdoor-unit control part 43 are integrated in the control device 3 having one kind of hardware, and independent operations are made possible on the hardware included in the control device 3. The control device 3 has a master control part 40 for making the indoor-unit control parts 41_1 and 41_2 and the outdoor-unit control part 43 virtually present within the control device.

In the control device 3, the indoor-unit control parts 41_1 and 41_2 and the outdoor-unit control part 43 are configured to be capable of mutually transferring information. Additionally, the indoor-unit control parts 41_1 and 41_2 and the outdoor-unit control part 43 may perform, for example, autonomous decentralized control for making the individual control parts realize independent autonomous decentralized controls while sharing information. Here, the autonomous decentralized control means that information is received from the sensors 20 and other control parts (for example, the indoor-unit control part 41_2 and the outdoor-unit control part 43 are equivalent to the other control parts in the case of the indoor-unit control part 41_1), and a predetermined application gives control commands to the corresponding indoor units A1 and A2 or outdoor unit B (for example, the indoor unit A1 in the case of the indoor-unit control part 41_1) according to control rules with this information as an input.

In the indoor unit A1, indoor unit local controllers 52 that are respectively provided to correspond to various machinery 51, such as the indoor fan 32 and the indoor-unit expansion valve 33 (refer to Fig. 1), are connected to the common bus 5 through a gateway (communication means) 53. In addition, although illustration is omitted, the indoor unit A2 is also configured to be the same as the indoor unit A1.

In the outdoor unit B, outdoor unit local controllers 62 that are respectively provided to correspond to various machinery 61, such as the compressor 11, the four-way valve 12, and an outdoor fan 13 (refer to Fig. 1), are connected to the common bus 5 through a gateway (communication means) 63.

The gateways 53 and 63 are assemblies of functions including, for example, a communication driver, an address storage region, a machinery attribute storage region, a configuration machinery information storage region, an OS, and a communication framework.

The address storage region is a storage region for storing addresses that are unique identification numbers assigned in order to communicate with the control device 3 or the like.

Additionally, the machinery attribute storage region is a storage region for storing its own attribute information and attribute information about the machinery 51 and 61 to be held. For example, information, such as information about whether there is an indoor unit or an outdoor unit, capacity, installed sensors (for example, a temperature sensor, a pressure sensor, and the like), and information (for example, the number of fan taps, the full pulse of valves, and) about the machinery, is stored.

Moreover, the sensors 20 (for example, the pressure sensors that measure the refrigerant pressures, the temperature sensor that measures the refrigerant temperature, and the like) provided in the indoor units A1 and A2 and the outdoor unit B are respectively connected to the common bus 5 through an AD board 71. Here, in a case where the measurement accuracy of the sensors 20 is low, nodes having a correction function for correcting a measurement value may be provided between the AD board 71 and the sensors 20. In this way, by giving the correction function, it is possible to use sensors, which are inexpensive and are not so high in measurement accuracy, as the sensors 20.

In such an air conditioning system 1, for example the indoor-unit control parts 41_1 and 41_2 of the control device 3 acquire measurement data and control information acquired from the sensors 20, the indoor unit local controllers 52, and the outdoor unit local controllers 62 through the common bus 5, and executes a predetermined indoor unit control program on the basis of the measurement data, thereby outputting control commands to the various machinery (for example, the indoor fan 32, the indoor-unit expansion valve 33, and the like) provided the indoor units A1 and A2. The control commands are sent to the indoor unit local controllers 52 through the common bus 5 and the gateway 53. The indoor unit local controllers 52 drive the corresponding pieces of machinery, respectively, on the basis of the received control commands. Accordingly, the control of the indoor units A1 and A2 based on the control commands is realized.

Similarly, the outdoor-unit control part 43 of the control device 3 acquires the measurement data and the control information from the sensors 20, the indoor unit local controllers 52, and the outdoor unit local controllers 62 through the common bus 5, and executes a predetermined outdoor unit control program on the basis of these measurement data, thereby outputting control commands to the various machinery (for example, the compressor 11, the four-way valve 12, the outdoor heat exchanger 13, the outdoor fan 15, the outdoor-unit expansion valve 17, and the like) provided in the outdoor unit B. The control commands are sent to the outdoor unit local controllers 62 through the common bus 5 and the gateway 63. The outdoor unit local controllers 62 drive the corresponding pieces of machinery, respectively, on the basis of the received control commands.

The indoor units A1 and A2 and the outdoor unit B may be subjected to the autonomous decentralized control by the indoor-unit control parts 41_1 and 41_2 and the outdoor-unit control part 43, respectively. In this case, the control rules are set between the indoor units A1 and A2 and the outdoor unit B, and the control parts perform control, respectively, according to the control rules. For example, if the refrigerant pressures are mentioned as an example, in a case where the refrigerant pressures acquired from sensors 20 is within a predetermined first allowable fluctuation range, the indoor-unit control parts 41_1 and 41_2 determine control commands for making a user or the like coincide actual temperatures and actual air volumes with set temperatures and set air volumes, and outputs the control commands to the indoor units A1 and A2, respectively, through the common bus 5. Here, the indoor-unit control parts 41_1 and 41_2 may cooperate to perform mutual transfer of information, thereby determining the respective control commands. Additionally, the outdoor-unit control part 43 determines output commands of the air conditioning system 1 for maintaining the refrigerant pressure at a predetermined second allowable fluctuation range, for example, control commands regarding the rotational speed of the compressor 11, the rotating speed of the outdoor fan 15, and the like, and transmits the control commands to the outdoor unit B through the common bus 5.

For example, by setting the first allowable range to be wider than the second allowable range, it is possible for the outdoor-unit control part 43 to ascertain output change information about the indoor units A1 and A2 and determine the behavior of the outdoor unit B.

In addition, the control device 3, the indoor unit local controllers 52, and the outdoor unit local controllers 62 are constituted with, for example, a central processing unit (CPU), a random access memory (RAM), a read only memory (ROM), a computer-readable storage medium, and the like. A series of processing for realizing various functions are stored in the storage medium or the like in the form of a program as an example, and the various functions are realized when the CPU reads this program to the RAM or the like to execute processing of information and calculation processing. In addition, a form in which this program is installed in advance in the ROM or other storage media, a form in which this program is provided after being stored in the computer-readable storage medium, a form in which this program is distributed through communication means in a wired or wireless manner, or the like may be applied. The computer-readable storage medium is a magnetic disk, a magnetic-optical disk, a CD-ROM, a DVD-ROM, a semiconductor memory, or the like.

Here, in the related-art air conditioning systems that control the outdoor unit and the indoor unit using the different control devices, respectively, the outdoor unit and the indoor unit are operated by different control programs. Therefore, it is difficult to accurately ascertain the operating state of the overall air conditioning system. For this reason, in the related-art air conditioning systems, it is necessary to collect and manage data, such as the operating state and various state quantities of the air conditioning system, using a server or the like for remote monitoring.

Additionally, if the indoor units A and the outdoor unit B manufactured by different makers are used for the air conditioning system 1 related to the present embodiment, it is necessary to determine whether or not the machinery installed in these units is operating correctly as the air conditioning system 1.

Thus, the control device 3 of the air conditioning system 1 related to the present embodiment includes a malfunction prediction control part 44.

The malfunction prediction control part 44 individually changes the operating points of the machinery (the machinery 51 and 61) installed in the indoor units A or the outdoor unit B, acquires predetermined state quantities before and after the change, and executes a malfunction prediction operation for determining the presence or absence of an anomaly in the machinery.

That is, the control device 3 is able to individually operate the various machinery installed in the air conditioning system 1 using the malfunction prediction control part 44, irrespective of control of normal operations, such as a cooling operation and a heating operation. Accordingly, the control device 3 performs active monitoring control for positively operating the machinery. The state quantities are, for example, the temperature of the refrigerant, the pressure of the refrigerant, the flow rate of the refrigerant, and the like that are measured by the sensors 20.

Fig. 3 is a functional block diagram illustrating the functions of the malfunction prediction control part 44 in the control device 3 related to the present embodiment.

The malfunction prediction control part 44 includes a check machinery selection unit 70, an operating point change control unit 72, a state quantity acquisition unit 74, a storage unit 76, an anomaly determination unit 78, and a refrigerant amount calculation unit 80.

The check machinery selection unit 70 selects machinery of which an operating point is individually changed for the malfunction prediction operation.

The operating point change control unit 72 outputs a predetermined control command to the machinery of which the operating point is changed.

The state quantity acquisition unit 74 acquires predetermined state quantities before and after a change in an operating point from the various sensors 20 and the like.

The storage unit 76 stores the state quantities acquired by the state quantity acquisition unit 74 in time series.

The anomaly determination unit 78 determines the presence or absence of an anomaly in the machinery on the basis of the acquired state quantities.

The refrigerant amount calculation unit 80 executes refrigerant amount calculation processing for calculating the amount of the refrigerant within the air conditioning system 1 on the basis of the acquired state quantities.

In this way, the malfunction prediction operation related to the present embodiment, the influence that the machinery has on the air conditioning system 1 can be clarified by individually changing the operating points of the machinery installed in the indoor units A or the outdoor unit B, and acquiring the state quantities before and after the change. Then, in a case where the influence is not proper, a possibility or the like that the machinery has an anomaly (malfunction or the like) can be considered.

Additionally, in the air conditioning system 1 related to the present embodiment, one control device 3 controls the indoor units A and the outdoor unit B. Thus, the control states of the respective pieces of machinery, the various state quantities in the air conditioning system 1, and the like can be managed by the control device 3. For this reason, association between timings at which the operating points of the machinery are changed individually, and changes in the state quantities before and after the timings is easy. That is, in the air conditioning system 1 related to the present embodiment, the operating state of the air conditioning system 1 can be ascertained simply and accurately without using the server for remote monitoring like the related-art air conditioning systems. For example, in a case where abnormal changes have occurred in the state quantities before and after the operating points of the machinery are changed, or in a case where no change does not occur, it is determined that a malfunction occurs in the machinery.

Additionally, in the air conditioning system 1 related to the present embodiment, even if the indoor units A and the outdoor unit B manufactured by different makers are used, the presence or absence of an anomaly is determined by acquiring predetermined state quantities before and after the operating points of the machinery installed in these units are changed individually. Thus, it is possible to accurately ascertain the influence that the operation of the machinery has on the air conditioning system 1.

Additionally, in the related-art air conditioning systems in which the presence or absence of an anomaly, or the like is monitored remotely, a number of pieces of machinery are installed. Thus, the amount of operating data to be transmitted to the server or the like for remote monitoring is huge, and it is difficult to accurately and rapidly ascertain the state of the air conditioning system and to determine the presence or absence of an anomaly.

Thus, the above-described state quantity acquisition unit 74 acquires predetermined state quantities that fluctuate more easily according to the changes in operating points on of the machinery. That is, sensors 20 that acquire state quantities according to machinery of which operating points are changed are determined in advance. Then, the anomaly determination unit 78 determines the presence or absence of an anomaly in the machinery on the basis of the acquired state quantities. In addition, the above state quantities that fluctuate more easily are, in other words, state quantities in which time variations to the changes in the operating points of the machinery are larger.

In this way, in the air conditioning system 1 related to this configuration, in a case where the operating points of the machinery are changed, the presence or absence of an anomaly in the machinery is determined on the basis of the predetermined state quantities that fluctuate more easily. Thus, the operating state of the air conditioning system 1 can be determined earlier.

Additionally, even if the malfunction prediction operation is performed during the operation of the air conditioning system 1, the presence or absence of an anomaly in the machinery is determined on the basis of the predetermined state quantities that fluctuate more easily. Therefore, the presence or absence of an anomaly can be determined in a short time. Thus, a user's temperature adjustment sensation is not impaired.

The following Table 1 is a table showing an example of the combination between machinery of which operating points are changed, and state quantities to be acquired in the malfunction prediction operation.

[Table 1]

| | Detection Method | Acquired State Quantity (Determination Method) |
|---|---|---|
| Indoor-Unit Expansion Valve | Compulsive opening degree command | - During cooling<br>Changes of indoor temperature sensors 35_1, 35_2, 35_3 or changes in superheat degree<br>- During heating<br>Changes of indoor temperature sensors 35_1, 35_2, 35 3 |
| Indoor Fan | Compulsive rotational speed command | - During cooling<br>Change of low-pressure sensor 21_2<br>Rotation speed decrease: low pressure drop<br>Rotation speed increase: low pressure rise<br>- During heating<br>Change of high-pressure sensor 21_1<br>Rotation speed decrease: high pressure rise<br>Rotation speed increase: high pressure drop |
| Outdoor Fan | Compulsive rotational speed command | - During cooling<br>Change of high-pressure sensor 21_1<br>Rotation speed decrease: high pressure rise<br>Rotation speed increase: high pressure drop<br>- During heating<br>Change of low-pressure sensor 21_2<br>Rotation speed decrease: low pressure drop<br>Rotation speed increase: low pressure rise |
| Four-Way Valve | Determine flow direction of refrigerant (switching command) | - During cooling<br>Value of outdoor temperature sensor 24 > value of indoor temperature sensor 35_3<br>- During heating<br>Value of outdoor temperature sensor 24 < value of indoor temperature sensor 35_3 |
| Outdoor-Unit Expansion Valve | Compulsive opening degree command | Change in pressure<br>- During cooling<br>Opening direction: value of high-pressure sensor 21_1 decreases<br>Closing direction: value of high-pressure sensor 21_1 increases<br>- During cooling<br>Opening direction: value of low-pressure sensor 21_2 increases or change in superheat degree<br>Closing direction: value of low-pressure sensor 21_2 decreases or change in superheat degree |

In a case where machinery of which an operating point is changed is the indoor-unit expansion valve 33, a compulsive opening degree command for changing the opening degree by a predetermined amount is output to the indoor-unit expansion valve 33. The amount of heat exchange by the indoor heat exchanger 31 is changed by this compulsive opening degree command, and it is determined whether or not the indoor-unit expansion valve 33 is functioning normally.

Then, state quantities acquired in this case are changes of the indoor temperature sensors 35_1, 35_2, and 35_3. In addition, a change in superheat degree may be acquired as a state quantity during cooling. This is because a temperature change appears as a reaction earliest as a presence or absence of a flow of the refrigerant within the refrigerant line 10, in a case where the opening degree of the indoor-unit expansion valve 33 is changed.

In a case where machinery of which an operating point is changed is the indoor fan 32, a compulsive rotational speed command for changing the rotational speed by a predetermined amount is output to the indoor fan 32. The amount of heat exchange by the indoor heat exchanger 31 is changed by this compulsive rotational speed command, and it is determined whether or not the indoor fan 32 is functioning normally.

Then, state quantities acquired in this case are changes of the high-pressure sensor 21_1 and the low-pressure sensor 21_2. This is because a pressure change of the refrigerant appears as a reaction earliest, in a case where the rotational speed of the indoor fan 32 is changed. Specifically, if the indoor fan 32 is functioning normally during the cooling operation, the value of the low-pressure sensor 21_2 falls by reducing the rotational speed of the indoor fan 32, and the value of the low-pressure sensor 21_2 rises by increasing the rotational speed of the indoor fan 32. On the other hand, if the indoor fan 32 is functioning normally during the heating operation, the value of the high-pressure sensor 21_1 rises by reducing the rotational speed of the indoor fan 32, and the value of the high-pressure sensor 21_1 falls by increasing the rotational speed of the indoor fan 32.

In addition, in a case where the operating points of the indoor fan 32 included in the indoor units A are changed in this way, it is difficult to acquire pressure changes using the high-pressure sensor 21_1 and the low-pressure sensor 21_2 included in the outdoor unit B, in the related-art air conditioning systems that control the outdoor unit and the indoor unit using the different control devices, respectively.

However, in the air conditioning system 1 related to the present embodiment in which one control device 3 controls the indoor units A and the outdoor unit B, as described above, association between timings at which the operating points of the machinery are changed individually, and changes in the state quantities before and after the timings is easy. For this reason, the control device 3 acquires pressure changes using the high-pressure sensor 21_1 and the low-pressure sensor 21_2 to a change of the operating point of the indoor fan 32, and can easily determine the presence or absence of an anomaly of the indoor fan 32.

In a case where machinery of which an operating point is changed is the outdoor fan 15, a compulsive rotational speed command for changing the rotational speed by a predetermined amount is output to the outdoor fan 15. The amount of heat exchange by the outdoor heat exchanger 13 is changed by this compulsive rotational speed command, and it is determined whether or not the outdoor fan 15 is functioning normally.

Then, state quantities acquired in this case are changes of the high-pressure sensor 21_1 and the low-pressure sensor 21_2. This is because a pressure change of the refrigerant appears as a reaction earliest, in a case where the rotational speed of the outdoor fan 15 is changed. Specifically, if the outdoor fan 15 is functioning normally during the cooling operation, the value of the high-pressure sensor 21_1 rises by reducing the rotational speed of the outdoor fan 15, and the value of the high-pressure sensor 21_1 falls by increasing the rotational speed of the outdoor fan 15. On the other hand, if the outdoor fan 15 is functioning normally during the heating operation, the value of the low-pressure sensor 21_2 falls by reducing the rotational speed of the outdoor fan 15, and the value of the low-pressure sensor 21_2 rises by increasing the rotational speed of the outdoor fan 15.

In a case where machinery of which an operating point is changed is the four-way valve 12, whether or not the four-way valve 12 is functioning normally is determined on the basis of a flow direction of the refrigerant during the cooling operation or the heating operation.

In addition, in order to perform a defrosting operation during the heating operation, a switching command for switching the direction of the refrigerant is output to the four-way valve 12. The flow direction of the refrigerant may be changed by this switching command, and it may be determined whether or not the four-way valve 12 is functioning normally.

State quantities acquired in this case are values of any of the indoor temperature sensors 35_1, 35_2, and 35_3 and the outdoor temperature sensor 24. This is because the flow direction during the cooling operation and the flow direction during the heating operation are determined uniquely; therefore determination on whether or not the four-way valve 12 is functioning normally is possible if the temperatures of the indoor units A and the outdoor unit B are acquired. Specifically, if the four-way valve 12 is functioning normally during the cooling operation, the value of the outdoor temperature sensor 24 becomes higher than the value of indoor temperature sensor 35_3 or the like. On the other hand, if the four-way valve 12 is functioning normally during the heating operation, the value of the outdoor temperature sensor 24 becomes lower than the value of indoor temperature sensor 35_3 or the like.

In a case where machinery of which an operating point is changed is the outdoor-unit expansion valve 17, a compulsive opening degree command for changing the opening degree by a predetermined amount is output to the outdoor-unit expansion valve 17. The amount of heat exchange by the outdoor heat exchanger 13 is changed by this compulsive opening degree command, and it is determined whether or not the outdoor-unit expansion valve 17 is functioning normally.

Then, state quantities acquired in this case are changes of the high-pressure sensor 21_1 and the low-pressure sensor 21_2. This is because a pressure change appears as a reaction earliest in order to balance heat under operation depending on a change in the amount of heat exchange (circulation flow rate), in a case where the opening degree of the outdoor-unit expansion valve 17 is changed. Specifically, if the outdoor-unit expansion valve 17 is functioning normally during the cooling operation, the value of the high-pressure sensor 21_1 falls by opening the outdoor-unit expansion valve 17, and the value of the high-pressure sensor 21_1 rises by closing the outdoor-unit expansion valve 17. On the other hand, if the outdoor-unit expansion valve 17 is functioning normally during the heating operation, the value of the low-pressure sensor 21_2 rises by opening the outdoor-unit expansion valve 17, and the value of the low-pressure sensor 21_2 falls by closing the outdoor-unit expansion valve 17. Additionally, during the heating operation, a change in superheat degree calculated from the value of the low-pressure sensor 21_2 and the value of the outdoor temperature sensor 24 by opening and closing the outdoor-unit expansion valve 17 may be detected.

In addition, even if the operating points of the machinery are changed due to the malfunction prediction operation, the operating points of the machinery is returned to their original operating points after a predetermined time (for example, during several seconds) has passed.

Fig. 4 is a flowchart illustrating a flow of malfunction prediction processing (malfunction prediction program) related to the present embodiment. The malfunction prediction processing is executed by the control device 3.

First, in Step 100, it is determined whether or not a predetermined cumulative operation time (for example, 50 hours) has passed from the end of the malfunction prediction processing executed previously. In a case where the determination is positive, the processing proceeds to Step 102.

The malfunction prediction operation is performed in Step 102.

In addition, in the malfunction prediction operation, determination of the operating state is performed on a plurality of the indoor units A and a plurality of the outdoor units B by changing the operating points of the machinery in order one by one. Thus, the states of the indoor units A or the outdoor units B can be determined more exactly.

Additionally, in the malfunction prediction operation, the presence or absence of an anomaly in the machinery is determined during the operation of the air conditioning system 1.

In the malfunction prediction operation related to the present embodiment, the operating points of the machinery are changed in a short time. Thus, even if the air conditioning system 1 is operating, the presence or absence of an anomaly can be determined without impairing a user's temperature adjustment sensation.

In the next Step 104, it is determined whether or not there is any machinery showing an anomaly depending on the malfunction prediction operation. In a case where the determination is positive, the processing proceeds to Step 106, and in a case where the determination is negative, the processing returns to Step 100.

In Step 106, in order to solve the anomaly, the operation of the air conditioning system 1 is stopped and the malfunction prediction processing is ended.

Fig. 5A and B are flowcharts that illustrate an example of the malfunction prediction operation executed in Step 102. In Fig. 5A and 5B, as an example, machinery of which an operating point is changed individually is selected for the indoor-unit expansion valve 33.

First, in Step 200, a predetermined indoor unit A under stop is selected, and the temperature of the indoor heat exchanger 31 installed in the selected indoor unit A is stored in the storage unit 76.

The indoor units A are selected in order such that the indoor-unit expansion valves 33 are not checked and in order with a smaller value of address. Additionally, the temperature of the indoor heat exchanger 31 is the temperature measured by at least one of the indoor temperature sensor 35_1, 35_2, and the 35_3. Each temperature stored in Step 200 is stored as an initial value $T_n(0)$. $T_n$ is any of temperatures measured by the indoor temperature sensors 35_1, 35_2, and 35_3, $T_1$ shows a temperature measured by the indoor temperature sensor 35_1, $T_2$ shows a temperature measured by the indoor temperature sensor 35_2, and $T_3$ shows a temperature measured by the indoor temperature sensor 35_3.

In addition, the indoor-unit expansion valve 33 of the indoor unit A under stop is in a closed state.

In the next Step 202, the indoor-unit expansion valve 33 installed in the indoor unit A selected in Step 200 is opened. Specifically, a predetermined opening degree pulse is output from the operating point change control unit 72 to the indoor-unit expansion valve 33.

In the next Step 204, temperatures are measured by the indoor temperature sensors 35_1, 35_2, and 35_3 and are stored in the storage unit 76, and it is determined whether or not a temperature change before and after the indoor-unit expansion valve 33 is opened is a predetermined temperature or lower. As an example, in a case where a temperature difference between the measured temperature $T_n(t)$ and the initial value $T_n(0)$ satisfies the following Equation, the determination is regarded as being positive.

$$T_n(t) \leq T_n(0) - 10$$

In Step 204, in a case where the determination is positive, the indoor-unit expansion valve 33 is regarded as being normal, and the processing proceeds to Step 206. On the other hand, in a case where the determination is negative, the processing proceeds to Step 208.

In Step 206, the indoor-unit expansion valve 33 is closed again, and the processing proceeds to Step 212.

In Step 208, the indoor-unit expansion valve 33 is closed again, and the processing proceeds to Step 210.

In Step 210, since the normality of the indoor-unit expansion valve 33 is not determined definitely, information showing the indoor-unit expansion valve 33 of an indoor unit A selected as holding processing is stored in the storage unit 76, and the processing proceeds to Step 212.

In Step 212, regarding all indoor units A under stop, it is determined whether or not check on the indoor-unit expansion valves 33 is completed. In a case where the determination is positive, the processing proceeds to Step 214, and in a case where the determination is negative, the processing returns to Step 200.

In Step 214, a predetermined indoor unit A under operation is selected, and the temperature of the indoor heat exchanger 31 installed in the selected indoor unit A is stored in the storage unit 76.

The indoor units A are selected in order such that the indoor-unit expansion valves 33 are not checked and in order with a smaller value of address.

In addition, the indoor-unit expansion valve 33 of the indoor unit A under operation is in an open state.

In the next Step 216, the indoor-unit expansion valve 33 installed in the indoor unit A selected in Step 214 is fully closed. Specifically, 0 is output as an opening degree pulse from the operating point change control unit 72 to the indoor-unit expansion valve 33.

In the next Step 218, temperatures are measured by the indoor temperature sensors 35_1, 35_2, and 35_3, and it is determined whether or not a temperature changed before and after the indoor-unit expansion valve 33 is closed is a first temperature or higher. Specifically, in a case where a temperature difference based on the measured temperature $T_{n=1,2,3}(t)$ and the initial value $T_{n=1,2,3}(0)$ satisfies the following equations, the determination is regarded as being negative. In addition, the following equations are equations for determining whether or not the indoor-unit expansion valve 33 is operating depending on a change in superheat degree as an example.

$$SH(0) = T_3(0) - \min(T_2(0), T_1(0))$$

$$SH(t) = T_3(t) - \min(T_2(t), T_1(t))$$

$$SH(t) \geq SH(0) + 5$$

In Step 218, in a case where the determination is positive, the indoor-unit expansion valve 33 is regarded as being normal, the opening degree of the indoor-unit expansion valve 33 is returned its original, and the processing proceeds to Step 224. On the other hand, in a case where the determination is negative, the processing proceeds to Step 220.

The temperature change of the indoor unit A under operation may not be the first temperature or higher depending on the operating state of the air conditioning system 1.

Thus, in Step 220, it is determined whether or not a change in temperature measured in each of the indoor temperature sensors 35_1, 35_2, and 35_3 is a second temperature or higher, not the first temperature that is the temperature change of the superheat degree.

For example, in a case where the temperature difference between the measured temperature $T_{n=1,2,3}(t)$ and the initial value $T_{n=1,2,3}(0)$ satisfies the following equations, the determination is regarded as being negative.

$$T_{n=1,2,3}(t) \geq T_{n=1,2,3}(0) + 10$$

In Step 220, in a case where the determination is positive, the indoor-unit expansion valve 33 is regarded as being normal, the opening degree of the indoor-unit expansion valve 33 is returned its original, and the processing proceeds to Step 224. On the other hand, in a case where the determination is negative, the processing proceeds to Step 222.

In Step 222, since the normality of the indoor-unit expansion valve 33 is not determined definitely, information showing the indoor-unit expansion valve 33 of an indoor unit A selected as holding processing is stored in the storage unit 76, and the processing proceeds to Step 224.

In Step 224, regarding all indoor units A under operation, it is determined whether or not check on the indoor-unit expansion valves 33 is completed. In a case where the determination is positive, the processing proceeds to Step 226, and in a case where the determination is negative, the processing returns to Step 214.

In Step 226, regarding all indoor units A, it is determined whether or not the indoor-unit expansion valves 33 are normal. In a case where the determination is positive, the malfunction prediction operation is ended.

On the other hand, in a case where information showing the indoor-unit expansion valve 33 subjected to the holding processing is stored in the storage unit 76, the determination is regarded as being negative in Step 226. In this case, the processing returns to Step 200, and after a predetermined time (for example, 60 minutes) has passed, the malfunction prediction operation is repeated again.

The reason why the malfunction prediction operation is performed again after the passage of the predetermined time is because malfunction prediction operation is executed during operation of the air conditioning system 1 to occur; therefore, a case where a change does not occur in state quantities occur depending on the operating state of the air conditioning system 1 even if the operating points of the machinery are changed. If the predetermined time has passed, even if the operating state of the air conditioning system 1 changes and the operating points of the machinery are changed similar to the previous case, a change may occur in state quantities and it may be determined that the machinery is normal.

In the malfunction prediction operation, even if there is any machinery of which the normality is not determined and the malfunction prediction operation is repeated by a predetermined number of times (for example, twice), the machinery that cannot be definitely determined to be normal is determined to have an anomaly (a malfunction or incompatible with a the air conditioning system 1).

By virtue of the malfunction prediction operation described above, an anomaly in the machinery can be detected before a malfunction of the air conditioning system 1, and the anomaly determination at a constant level using data is made possible, not based on determination resulting from a human being's thought.

Additionally, by collecting only the results originating from a malfunction prediction operation and aggregating the verification results of the machinery and data of incompatible sites, statistical data of machinery in which a problem occurs in quality, such as which kind of problem occurs in a combination of any machinery of any maker and any indoor unit of any maker, is obtained. It is also possible to reflect this result on an immediate response to an anomaly or design change.

Additionally, it is possible to classify, for example, the capacity of the indoor units A being insufficient (a selection mistake, performance degradation) with respect to a load generated in an indoor chamber, and the like depending on the operating state. As a result, the range of compensation for incompatibility can be limited.

Next, the refrigerant amount calculation processing executed in the refrigerant amount calculation unit 80 of the control device 3 will be described.

As described above, since the control device 3 controls the indoor units A and the outdoor unit B, the various state quantities and the like in the air conditioning system 1 can be managed.

Thus, in the refrigerant amount calculation processing, the amount of the refrigerant within the air conditioning system 1 is calculated using the state quantities of the refrigerant under the operation of the air conditioning system 1. Accordingly, the state of an increase and a decrease in the amount of the refrigerant can be managed in time series, and the presence or absence of leakage of the refrigerant can be determined.

The refrigerant amount calculation processing related to the present embodiment divides the air conditioning system 1 into a plurality of regions (hereinafter a "divided regions") virtually.

An example of the division are 1. Outdoor heat exchanger 13, 2. Indoor heat exchanger 31, 3. Gas pipe, 4. Liquid pipe, 5. Pressure vessel, and 6. In-machinery line.

The gas pipe is a pipe through which a gas refrigerant that faces from the indoor units A to the outdoor unit B flows, in the refrigerant line 10. The liquid pipe is a line through which a liquid refrigerant that faces from the outdoor unit B to the indoor units A flows, in the refrigerant line 10.

The pressure vessel is the compressor 11 and the accumulator 16.

The in-machinery line is a line that connects the respective pieces of machinery within the indoor units A, and a line that connects the respective pieces of machinery within the outdoor unit B.

The amount of the refrigerant can be calculated, for example, by multiplying the density (kg/$m^3$) of the refrigerant by the internal volume ($m^3$) of the lines.

The refrigerant density is calculated on the basis of the state quantities measured by the pressure sensors and the temperature sensor included in the air conditioning system 1. Additionally, the lengths, internal diameters, and the like of respective lines through that a refrigerant flows are obtained in advance as design values, and the internal volumes of the lines, are calculated from the design values. Also, the amount of the refrigerant is calculated for each divided region, and the total of these amounts is estimated as the amount of the refrigerant circulating through the air conditioning system 1.

Next, a method for calculating the amount of the refrigerant will be described for each divided region taking the case of the cooling operation as an example.

1. Outdoor Heat Exchanger 13 (Condenser)

In the outdoor heat exchanger 13, a liquid phase and a gas phase are present in a mixed manner, and the amount of the refrigerant required in the operating state varies greatly depending on a liquid phase region generated inside the outdoor heat exchanger. Thus, the control device 3 stores a map, in which the amount of the refrigerant within the outdoor heat exchanger 13 in the operating state of the air conditioning system 1 is predicted, in advance. In this map, for example, a horizontal axis is high pressure and a vertical axis is the amount of the refrigerant, and a relationship between the high pressure and the amount of the refrigerant according to different supercooling degrees is shown.

That is, in the refrigerant amount calculation processing, the amount of the refrigerant is calculated by reading the amount of the refrigerant according to a measurement value of the high-pressure sensor 21_1 and a supercooling degree from the map. In addition, the invention is not limited, and the amount of the refrigerant within the outdoor heat exchanger 13 may be calculated by calculating the mean density of the refrigerant within the outdoor heat exchanger 13 on the basis of the pressure and temperature in the outdoor heat exchanger 13, and multiplying the density by a volume within the outdoor heat exchanger 13.

2. Indoor Heat Exchanger 31 (Evaporator)

In the indoor heat exchanger 31, the liquid phase and the gas phase are also present in a mixed manner. Thus, similar to the outdoor heat exchanger 13, the control device 3 stores a map, in which the amount of the refrigerant within the indoor heat exchanger 31 in the operating state of the air conditioning system 1 is predicted, in advance. In this map, for example, a horizontal axis is low pressure and a vertical axis is the amount of the refrigerant, and a relationship between the low pressure and the amount of the refrigerant according to superheat degrees is shown.

That is, in the refrigerant amount calculation processing, the amount of the refrigerant is calculated by reading the amount of the refrigerant according to the measurement value of the low-pressure sensor 21_2 and a superheat degree from the map.

In addition, the invention is not limited, and the amount of the refrigerant within the indoor heat exchanger 31 may be calculated by calculating the mean density of the refrigerant within the indoor heat exchanger 31 on the basis of the pressure and temperature in the indoor heat exchanger 31, and multiplying the density by a volume within the indoor heat exchanger 31.

3. Gas Pipe

In the refrigerant amount calculation processing, the amount of the refrigerant is calculated by calculating a gas density from the measurement value of the low-pressure sensor 21_2, and the measurement value of the temperature sensor in the gas pipe, and multiplying this gas density by the internal volume of the gas pipe.

4. Liquid Pipe

In the refrigerant amount calculation processing, the amount of the refrigerant is calculated by calculating a liquid density from the measurement value of the low-pressure sensor 21_2, and the measurement value of the temperature sensor in the liquid pipe, and multiplying this liquid density by the internal volume of the liquid pipe.

5. Pressure Vessel

In the refrigerant amount calculation processing, the amount of the refrigerant is calculated by calculating a gas density from the measurement value of the low-pressure sensor 21_2, and the measurement value of the temperature sensor in the pressure vessel, and multiplying this gas density by the internal volume of the pressure vessel.

In addition, since there is no liquid into the accumulator 16 during the operation of the air conditioning system 1, it can be assumed that a substantially single-phase superheated gas present inside the pressure vessel.

6. In-machinery Line

As the in-machinery line, there is a line a pipe (hereinafter referred to as a "liquid line") through which a liquid phase flows, and a line (hereinafter referred to a "gas line") through which a gas phase flows. Thus, in the refrigerant amount calculation processing, the liquid line and the gas line are virtually divided according to the operating state of the air conditioning system 1. In the refrigerant amount calculation processing, the amount of the refrigerant within the liquid line is obtained by multiplying the liquid density calculated from the pressure and temperature in the liquid line by the internal volume of the liquid line, and the amount of the refrigerant within the gas line is obtained by multiplying the gas density calculated from the pressure and temperature in the gas line by the internal volume of the gas line. The sum of the amount of the refrigerant within the liquid line and the amount of the refrigerant within the gas line becomes the amount of the refrigerant in the in-machinery line.

In addition, the amount of the refrigerant is not limited to storing a correlation equation using the control device 3 and being calculated on the basis of this correlation equation, as described above. The control device 3 may be connected to an external server, and the amount of the refrigerant may be calculated in this server.

Fig. 6 is a flowchart illustrating a flow of refrigerant amount determination processing related to the present embodiment. The refrigerant amount determination processing is executed by the control device 3.

First, in Step 300, it is determined whether or not a predetermined cumulative operation time (for example, 50 hours) has passed from the end of the refrigerant amount determination processing executed previously. In a case where the determination is positive, the processing proceeds to Step 302.

In Step 302, the above-described refrigerant amount calculation processing is performed, and the calculated amount of the refrigerant is stored.

In the next Step 304, it is determined whether or not the amount of the refrigerant calculated this time is reduced by a predetermined amount or more, compared to the amount of the refrigerant calculated previously. This predetermined amount may be the ratio of the amount of the refrigerant calculated previously to the amount of the refrigerant calculated this time, or may be a difference (absolute value) between the amount of the refrigerant calculated previously and the amount of the refrigerant calculated this time. For example, in a case where the predetermined amount is calculated depending on the ratio and in a case where the amount of the refrigerant previously calculated is reduced by 10% or more compared to the amount of the refrigerant calculated this time, the answer is set to be positive in Step 304 and the processing proceeds to Step 306. On the other hand, in a case where the amount of the reduction is less than 10%, it is determined that the answer is negative, and the processing returns to Step 300. That is, in a case where the reduction of the amount of the refrigerant is a predetermined amount or more, an anomaly in which the refrigerant leaks out from the air conditioning system 1 occurs.

In Step 306, an alarm showing that the anomaly occurs is activated, for example, through the maintenance inspection device 6, and the refrigerant amount determination processing is ended.

As described above, the control device 3 for the air conditioning system 1 related to the present embodiment includes the outdoor-unit control part 43 capable of communication with the outdoor unit B through the communication medium, the outdoor-unit control part 43 acquiring, through the communication medium, the information about the machinery installed in the outdoor unit B and outputting control commands to the machinery installed in the outdoor unit B; and an indoor-unit control part 41 capable of communication with the indoor units A through the communication medium, the indoor-unit control part 41 acquiring, through the communication medium, the information about the machinery installed in the indoor units A and outputting the control commands to the machinery installed in the indoor units A. The control device 3 individually changes the operating points of the machinery installed in the indoor units A or the outdoor unit B, acquires the predetermined state quantities before and after the change, and determines the presence or absence of an anomaly in the machinery.

In this way, one control device 3 controls the indoor units A and the outdoor unit B, individually changes the operating points of the machinery installed in the indoor units A or the outdoor unit B, and acquires predetermined state quantities before and after the change. Thus, the operating state of the air conditioning system 1 can be ascertained more simply and accurately.

Although the invention has been described above using the above embodiment, the technical scope of the invention is not limited to the scope described in the above embodiment. Various changes or improvements can be added to the above embodiment without departing from the scope of the invention which is defined by the appended claims. Additionally, the above embodiment may be appropriately combined.

For example, a form in which the malfunction prediction processing and the refrigerant amount determination processing are executed after the passage of the predetermined cumulative operation time from the end of each processing executed previously has been described in the above embodiment. However, the invention is not limited to this, and may have a form in which each processing is executed at predetermined time intervals, such as once a week.

Additionally, the flow of the malfunction prediction processing or the refrigerant amount determination processing described in the above embodiment is also an example, unnecessary steps may be eliminated, new steps may be added, or processing order may be changed, without departing from the main point of the invention.

For example, a form in which the malfunction prediction processing is executed during the operation of the air conditioning system 1 has been described in the above embodiment. However, the invention is not limited to this, a form in which the malfunction prediction processing is executed during the stop of the air conditioning system 1.

Reference Signs List

1: AIR CONDITIONING SYSTEM
3: CONTROL DEVICE
41: INDOOR-UNIT CONTROL PART
43: OUTDOOR-UNIT CONTROL PART
44: MALFUNCTION PREDICTION CONTROL PART
A: INDOOR UNIT
B: OUTDOOR UNIT

## Claims

**1.** A control device (3) for an air conditioning system including one or a plurality of outdoor units (B) and one or a plurality of indoor units (A), the control device comprising:

outdoor-unit control means (43) which is capable of communicating with the outdoor unit through a communication medium (5), the outdoor-unit control means (43) is configured to acquire, through the communication medium (5), information about machinery (61) installed in the outdoor unit (B) and output a control command to the machinery (61) installed in the outdoor unit (B);
indoor-unit control means (41) which is capable of communicating with the indoor unit (A) through the communication medium (5), the indoor-unit control means (41) is configured to acquire, through the communication medium (5), information about machinery (51) installed in the indoor unit (A) and output a control command to the machinery (51) installed in the indoor unit (A); and
the control device (3) is **characterized by** further comprising an anomaly determination means (44) for determining the presence or absence of an anomaly in the machinery by being configured to individually change an operating point of the machinery installed in the outdoor unit (B) or the indoor unit (A) and to acquire a predetermined state quantity before and after the change.

**2.** The control device (3) for an air conditioning system (1) according to Claim 1,
wherein the anomaly determination means (44) is configured to acquire the predetermined state quantity that is the earliest reaction or only reaction to the change in the operating point of the machinery (51, 61), and determine the presence or absence of an anomaly in the machinery (51, 61).

**3.** The control device (3) for an air conditioning system (1) according to Claim 1 or 2,
wherein the anomaly determination means (44) is configured to determine the presence or absence of an anomaly of the machinery (51, 61) by changing, in order and one by one, the operating point of the machinery (51, 61) of the plurality of indoor units (A) and the plurality of outdoor units (B).

**4.** The control device (3) for an air conditioning system (1) according to any one of Claims 1 to 3,
wherein the anomaly determination means (44) is configured to determine the presence or absence of an anomaly of the machinery (51, 61) during the operation of the air conditioning system (1).

**5.** The control device (3) for an air conditioning system (1) according to any one of Claims 1 to 3,
wherein the amount of a refrigerant within the air conditioning system is calculated by multiplying refrigerant density, which is calculated on the basis of the state quantity during the operation of the air conditioning system, by an internal volume of the air conditioning system.

**6.** An air conditioning system (1) comprising:

one or a plurality of outdoor units (B);
one or a plurality of indoor units (A); and
the control device (3) according to any one of Claims 1 to 5.

7. A method for determining an anomaly of an air conditioning system (1) including one or a plurality of outdoor units (B) and one or a plurality of indoor units (A), outdoor-unit control means (43) which is capable of communication with the outdoor unit (B) through a communication medium (5), the outdoor-unit control means (43) configured to acquire, through the communication medium (5), information about machinery (61) installed in the outdoor unit (B) and output a control command to the machinery (61) installed in the outdoor unit (B), and indoor-unit control means (41) which is capable of communication with the indoor unit (A) through the communication medium (5), the indoor-unit control means (41) being configured to acquire, through the communication medium (5), information about machinery (61) installed in the indoor unit (A) and output a control command to the machinery (61) installed in the indoor unit (A), the method being **characterized by**:

   individually changing an operating point of the machinery (51, 61) installed in the outdoor unit (B) or the indoor unit (A);
   acquiring a predetermined state quantity before and after the change; and
   determining the presence or absence of an anomaly in the machinery (51, 61).

## Patentansprüche

1. Steuerungsvorrichtung (3) für eine Klimaanlage mit einer oder einer Vielzahl von Außeneinheiten (B) und einer oder einer Vielzahl von Inneneinheiten (A), wobei die Steuerungsvorrichtung umfasst:

   ein Außeneinheitssteuerungsmittel (43), das dazu fähig ist, mit der Außeneinheit durch ein Kommunikationsmedium (5) zu kommunizieren, wobei das Außeneinheitssteuerungsmittel (43) dazu konfiguriert ist, durch das Kommunikationsmedium (5) Informationen über eine Maschinenanlage (61), die in der Außeneinheit (B) installiert ist, zu erfassen und einen Steuerungsbefehl an die Maschinenanlage (61), die in der Außeneinheit (B) installiert ist, auszugeben;
   ein Inneneinheitssteuerungsmittel (41), das dazu fähig ist, mit der Inneneinheit (A) durch das Kommunikationsmedium (5) zu kommunizieren, wobei das Inneneinheitssteuerungsmittel (43) dazu konfiguriert ist, durch das Kommunikationsmedium (5) Informationen über eine Maschinenanlage (51), die in der Inneneinheit (A) installiert ist, zu erfassen und einen Steuerungsbefehl an die Maschinenanlage (51), die in der Inneneinheit (A) installiert ist, auszugeben; und
   wobei die Steuerungsvorrichtung (3) **dadurch gekennzeichnet ist, dass** sie ferner ein Anomalieermittlungsmittel (44) zum Ermitteln des Vorliegens oder Nichtvorliegens einer Anomalie in der Maschinenanlage umfasst, indem sie dazu konfiguriert ist, einen Betriebspunkt der Maschinenanlage, die in der Außeneinheit (B) oder der Inneneinheit (A) installiert ist, einzeln zu ändern und eine vorgegebene Zustandsgröße vor und nach der Änderung zu erfassen.

2. Steuerungsvorrichtung (3) für eine Klimaanlage (1) nach Anspruch 1,
wobei das Anomalieermittlungsmittel (44) dazu konfiguriert ist, die vorgegebene Zustandsgröße zu erfassen, die die früheste Reaktion oder einzige Reaktion auf die Änderung des Betriebspunktes der Maschinenanlage (51, 61) darstellt, und das Vorliegen oder Nichtvorliegen einer Anomalie in der Maschinenanlage (51, 61) zu ermitteln.

3. Steuerungsvorrichtung (3) für eine Klimaanlage (1) nach Anspruch 1 oder 2,
wobei das Anomalieermittlungsmittel (44) dazu konfiguriert ist, das Vorliegen oder Nichtvorliegen einer Anomalie der Maschinenanlage (51, 61) zu ermitteln, indem sie in der Reihenfolge und nacheinander den Betriebspunkt der Maschinenanlage (51, 61) der Vielzahl von Inneneinheiten (A) und der Vielzahl von Außeneinheiten (B) ändert.

4. Steuerungsvorrichtung (3) für eine Klimaanlage (1) nach einem der Ansprüche 1 bis 3,
wobei das Anomalieermittlungsmittel (44) dazu konfiguriert ist, das Vorliegen oder Nichtvorliegen einer Anomalie der Maschinenanlage (51, 61) während des Betriebs der Klimaanlage (1) zu ermitteln.

5. Steuerungsvorrichtung (3) für eine Klimaanlage (1) nach einem der Ansprüche 1 bis 3,
wobei die Menge eines Kältemittels innerhalb der Klimaanlage berechnet wird, indem die Kältemitteldichte, die auf der Grundlage der Zustandsgröße während des Betriebs der Klimaanlage berechnet wird, mit einem Innenvolumen der Klimaanlage multipliziert wird.

6. Steuerungsvorrichtung (3), umfassend:

eine oder eine Vielzahl von Außeneinheiten (B);
eine oder eine Vielzahl von Inneneinheiten (A); und
die Steuerungsvorrichtung (3) nach einem der Ansprüche 1 bis 5.

**7.** Verfahren zum Ermitteln einer Anomalie einer Klimaanlage (1) mit einer oder einer Vielzahl von Außeneinheiten (B) und einer oder einer Vielzahl von Inneneinheiten (A), einem Außeneinheitsteuerungsmittel (43), das zur Kommunikation mit der Außeneinheit (B) durch ein Kommunikationsmedium (5) fähig ist, wobei das Außeneinheitssteuerungsmittel (43) dazu konfiguriert ist, ist, durch das Kommunikationsmedium (5) Informationen über die Maschinenanlage (61), die in der Außeneinheit (B) installiert ist, zu erfassen und einen Steuerungsbefehl an die Maschinenanlage (61), die in der Außeneinheit (B) installiert ist, auszugeben, und einem Inneneinheitssteuerungsmittel (41), das zur Kommunikation mit der Inneneinheit (A) durch das Kommunikationsmedium (5) fähig ist, wobei das Inneneinheitssteuerungsmittel (41) dazu konfiguriert ist, durch das Kommunikationsmedium (5) Informationen über die Maschinenanlage (61), die in der Inneneinheit (A) installiert ist, zu erfassen und einen Steuerungsbefehl an die Maschinenanlage (61), die in der Inneneinheit (A) installiert ist, auszugeben, wobei das Verfahren durch Folgendes gekennzeichnet ist:

einzelnes Ändern eines Betriebspunktes der Maschinenanlage (51, 61), die in der Außeneinheit (B) oder der Inneneinheit (A) installiert ist;
Erfassen einer vorgegebenen Zustandsgröße vor und nach der Änderung; und
Ermitteln des Vorliegens oder Nichtvorliegens einer Anomalie in der Maschinenanlage (51, 61).

**Revendications**

**1.** Dispositif de commande (3) pour un système de climatisation comportant une ou plusieurs unités en extérieur (B) et une ou plusieurs unités en intérieur (A), le dispositif de commande comprenant :

un moyen de commande d'unité en extérieur (43) qui est en mesure de communiquer avec l'unité en extérieur par l'intermédiaire d'un support de communication (5), le moyen de commande d'unité en extérieur (43) est configuré pour acquérir, par l'intermédiaire du support de communication (5), des informations sur la machinerie (61) installée dans l'unité en extérieur (B), et délivrer une instruction de commande à la machinerie (61) installée dans l'unité en extérieur (B) ;
un moyen de commande d'unité en intérieur (41) qui est en mesure de communiquer avec l'unité en intérieur (A) par l'intermédiaire du support de communication (5), le moyen de commande d'unité en intérieur (41) est configuré pour acquérir, par l'intermédiaire du support de communication (5), des informations sur la machinerie (51) installée dans l'unité en intérieur (A) et délivrer une instruction de commande à la machinerie (51) installée dans l'unité en intérieur (A) ; et
le dispositif de commande (3) est **caractérisé en ce qu'**il comprend en outre un moyen de détermination d'anomalies (44) pour déterminer la présence ou l'absence d'une anomalie dans la machinerie en étant configuré pour modifier individuellement un point de fonctionnement de la machinerie installée dans l'unité en extérieur (B) ou l'unité en intérieur (A) et pour acquérir une quantité d'état prédéterminée avant et après la modification.

**2.** Dispositif de commande (3) pour un système de climatisation (1) selon la revendication 1,
dans lequel le moyen de détermination d'anomalies (44) est configuré pour acquérir la quantité d'état prédéterminée qui est la réaction la plus précoce ou la seule réaction à la modification du point de fonctionnement de la machinerie (51, 61), et déterminer la présence ou l'absence d'une anomalie dans la machinerie (51, 61).

**3.** Dispositif de commande (3) pour un système de climatisation (1) selon la revendication 1 ou 2,
dans lequel le moyen de détermination d'anomalies (44) est configuré pour déterminer la présence ou l'absence d'une anomalie de la machinerie (51, 61) en modifiant, dans l'ordre et un par un, les points de fonctionnement de la machinerie (51, 61) de la pluralité d'unités en intérieur (A) et de la pluralité d'unités en extérieur (B).

**4.** Dispositif de commande (3) pour un système de climatisation (1) selon l'une quelconque des revendications 1 à 3, dans lequel le moyen de détermination d'anomalies (44) est configuré pour déterminer la présence ou l'absence d'une anomalie de la machinerie (51, 61) pendant le fonctionnement du système de climatisation (1).

**5.** Dispositif de commande (3) pour un système de climatisation (1) selon l'une quelconque des revendications 1 à 3, dans lequel la quantité d'un réfrigérant dans le système de climatisation est calculée en multipliant la densité du réfrigérant, qui est calculée sur la base de la quantité d'état pendant le fonctionnement du système de climatisation, par un volume interne du système de climatisation.

**6.** Système de climatisation (1) comprenant :

une ou plusieurs unités en extérieur (B) ;
une ou plusieurs unités en intérieur (A) ; et
le dispositif de commande (3) selon l'une quelconque des revendications 1 à 5.

**7.** Procédé pour déterminer une anomalie d'un système de climatisation (1) comportant une ou plusieurs unités en extérieur (B) et une ou plusieurs unités en intérieur (A), un moyen de commande d'unité en extérieur (43) qui est en mesure de communiquer avec l'unité en extérieur (B) par l'intermédiaire d'un support de communication (5), le moyen de commande d'unité en extérieur (43) étant configuré pour acquérir, par l'intermédiaire du support de communication (5), des informations sur la machinerie (61) installée dans l'unité en extérieur (B) et délivrer une instruction de commande à la machinerie (61) installée dans l'unité en extérieur (B), et un moyen de commande d'unité en intérieur (41) qui est en mesure de communiquer avec l'unité en intérieur (A) par l'intermédiaire du support de communication (5), le moyen de commande d'unité en intérieur (41) étant configuré pour acquérir, par l'intermédiaire du support de communication (5), des informations sur la machinerie (61) installée dans l'unité en intérieur (A) et délivrer une instruction de commande à la machinerie (61) installée dans l'unité en intérieur (A), le procédé étant caractérisé en que qu'il :

modifie individuellement un point de fonctionnement de la machinerie (51, 61) installée dans l'unité en extérieur (B) ou l'unité en intérieur (A) ;
acquiert une quantité d'état prédéterminée avant et après la modification ; et
détermine la présence ou l'absence d'une anomalie dans la machinerie (51, 61).

FIG. 1

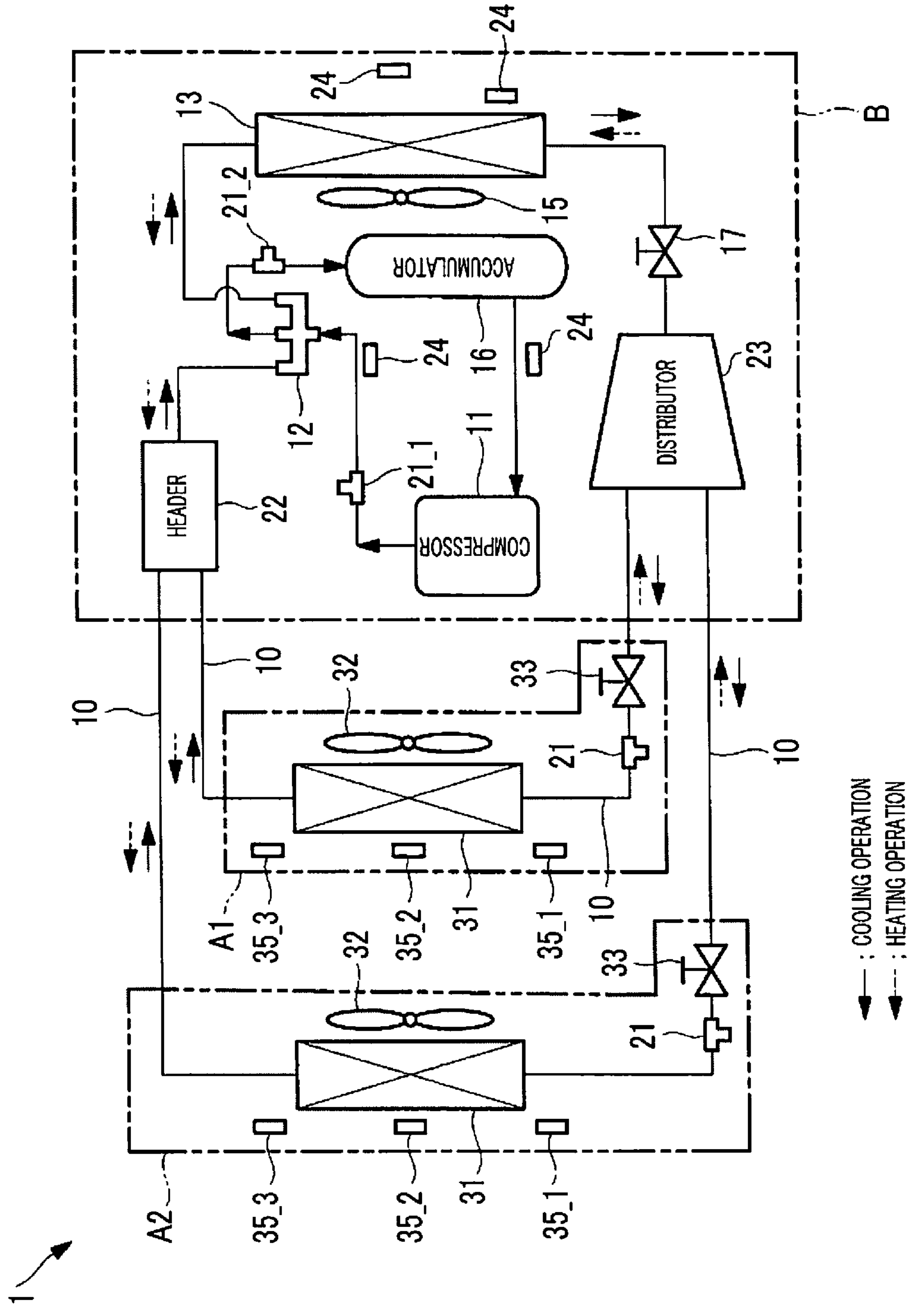

HEADER
ACCUMULATOR
COMPRESSOR
DISTRIBUTOR
B
A1
A2
1
10
11
12
13
15
16
17
21
21_1
21_2
22
23
24
31
32
33
35_1
35_2
35_3
; COOLING OPERATION
; HEATING OPERATION

FIG. 2

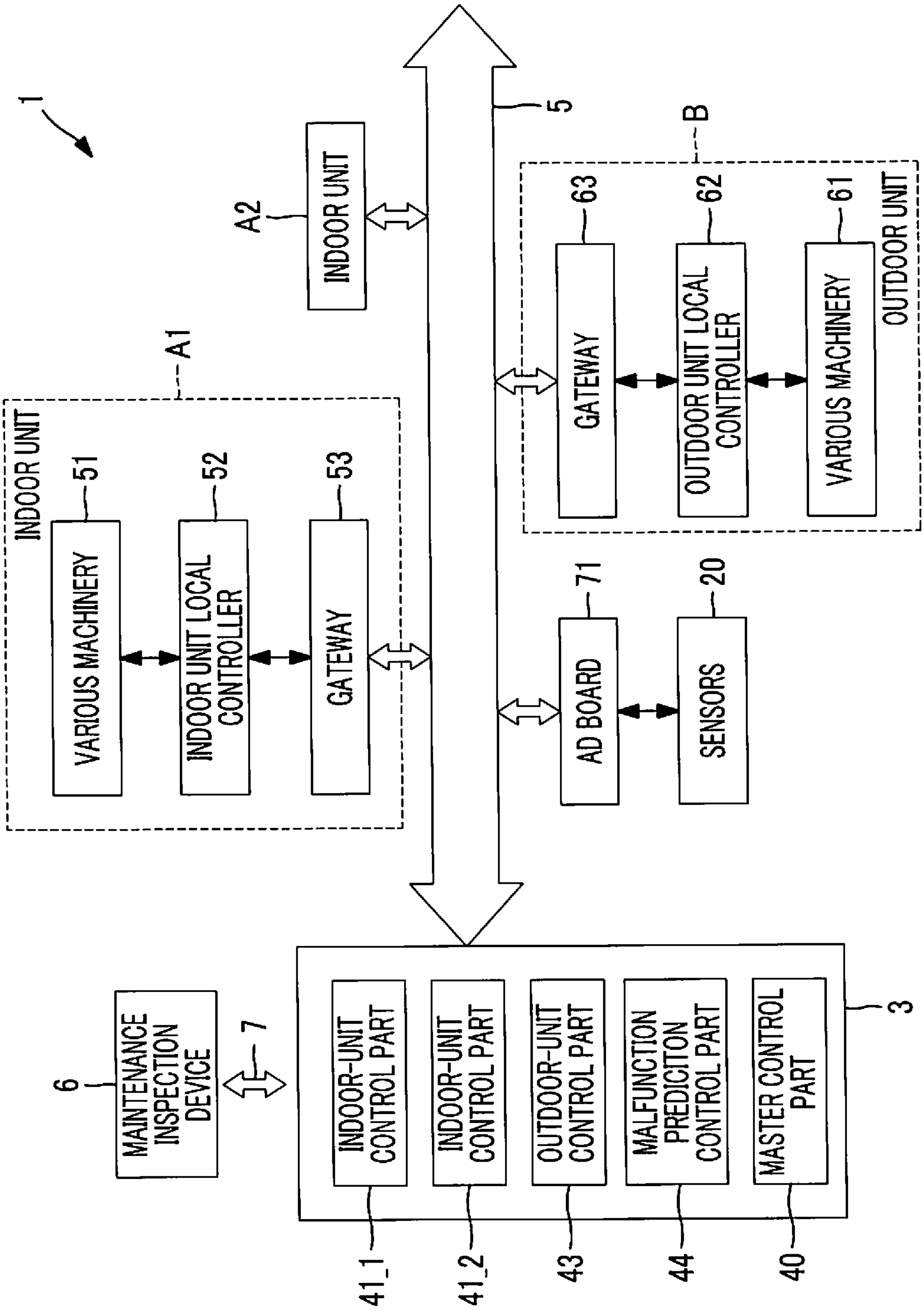
1
INDOOR UNIT
A1
VARIOUS MACHINERY
51
INDOOR UNIT LOCAL CONTROLLER
52
GATEWAY
53
A2
INDOOR UNIT
5
B
OUTDOOR UNIT
GATEWAY
63
OUTDOOR UNIT LOCAL CONTROLLER
62
VARIOUS MACHINERY
61
AD BOARD
71
SENSORS
20
6
MAINTENANCE INSPECTION DEVICE
7
INDOOR-UNIT CONTROL PART
41_1
INDOOR-UNIT CONTROL PART
41_2
OUTDOOR-UNIT CONTROL PART
43
MALFUNCTION PREDICITON CONTROL PART
44
MASTER CONTROL PART
40
3

FIG. 3

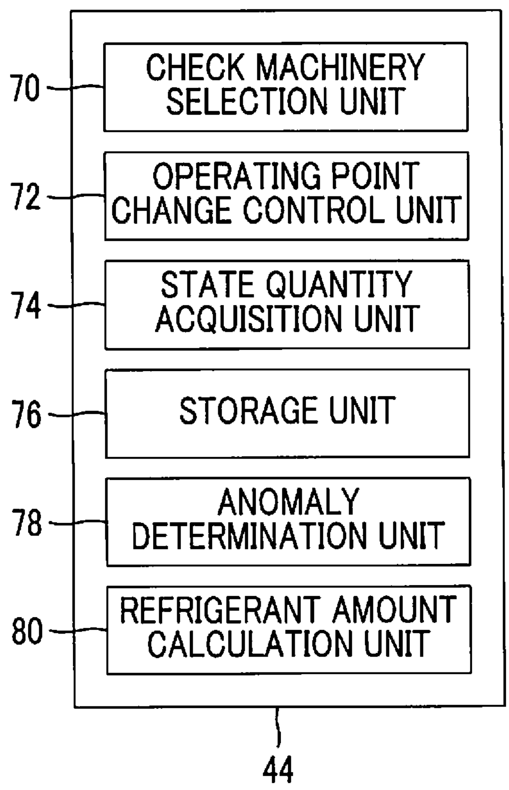
70
CHECK MACHINERY SELECTION UNIT
72
OPERATING POINT CHANGE CONTROL UNIT
74
STATE QUANTITY ACQUISITION UNIT
76
STORAGE UNIT
78
ANOMALY DETERMINATION UNIT
80
REFRIGERANT AMOUNT CALCULATION UNIT
44

FIG. 4

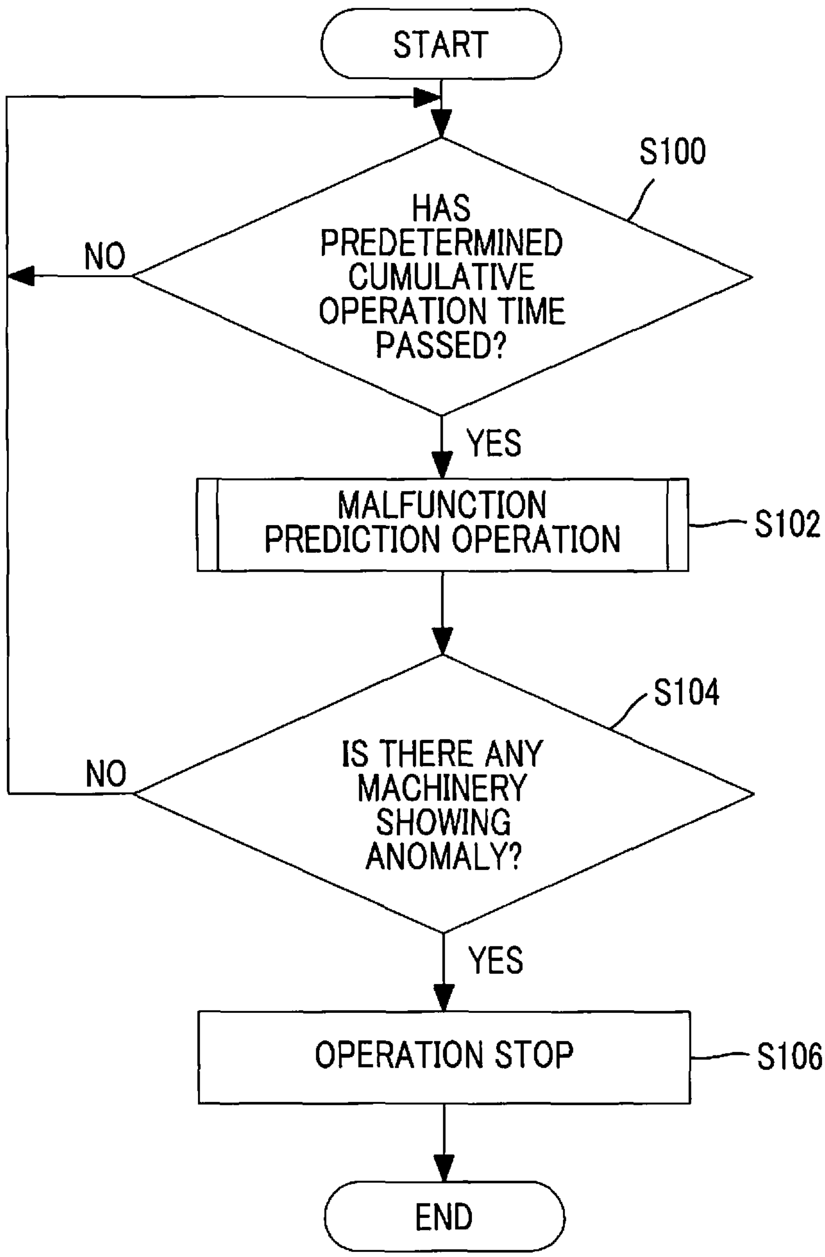
START
S100
HAS PREDETERMINED CUMULATIVE OPERATION TIME PASSED?
NO
YES
MALFUNCTION PREDICTION OPERATION
S102
S104
IS THERE ANY MACHINERY SHOWING ANOMALY?
NO
YES
OPERATION STOP
S106
END

FIG. 5A

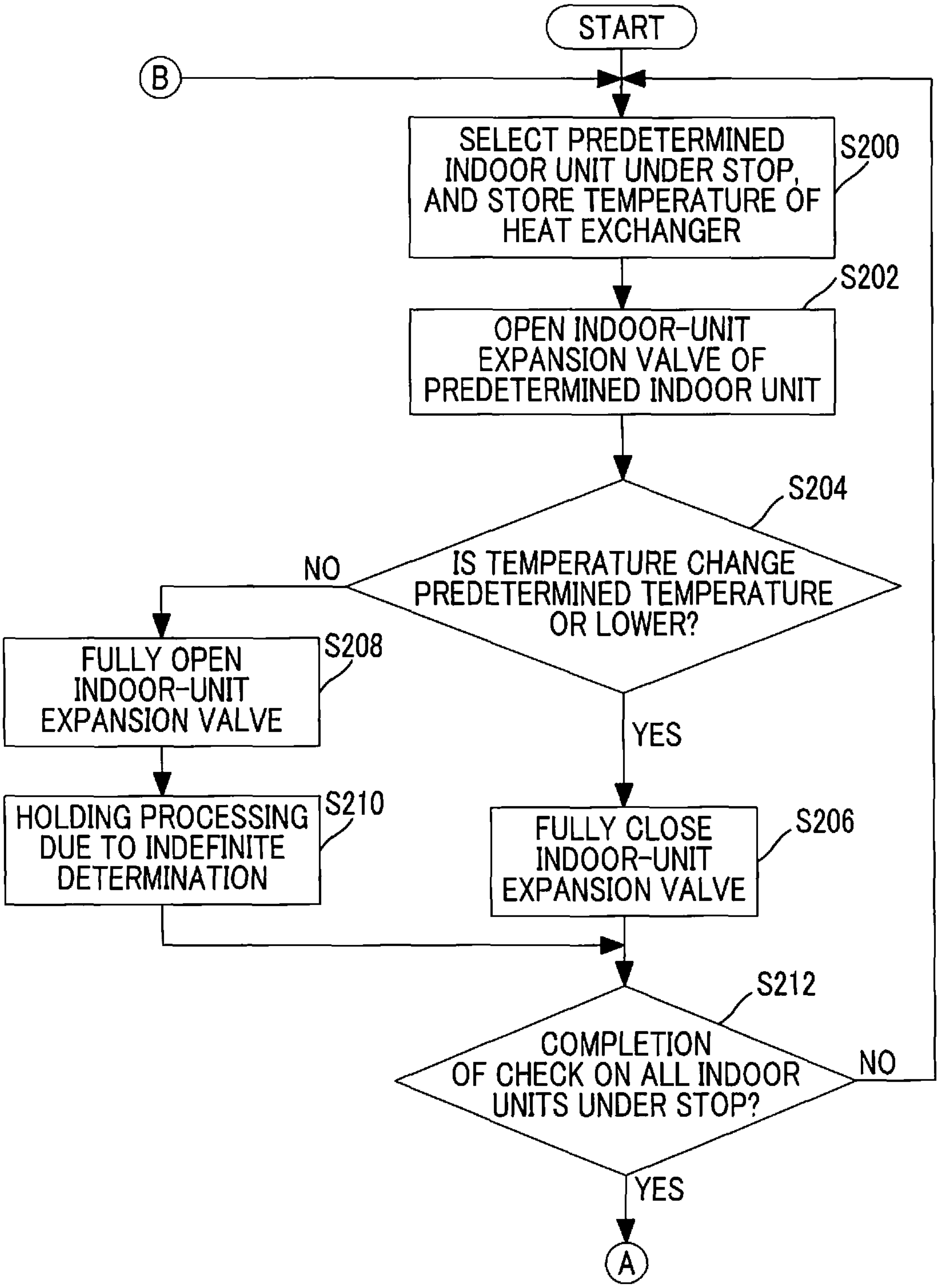
START
B
SELECT PREDETERMINED INDOOR UNIT UNDER STOP, AND STORE TEMPERATURE OF HEAT EXCHANGER
S200
OPEN INDOOR-UNIT EXPANSION VALVE OF PREDETERMINED INDOOR UNIT
S202
IS TEMPERATURE CHANGE PREDETERMINED TEMPERATURE OR LOWER?
S204
NO
YES
FULLY OPEN INDOOR-UNIT EXPANSION VALVE
S208
HOLDING PROCESSING DUE TO INDEFINITE DETERMINATION
S210
FULLY CLOSE INDOOR-UNIT EXPANSION VALVE
S206
COMPLETION OF CHECK ON ALL INDOOR UNITS UNDER STOP?
S212
NO
YES
A

FIG. 5B

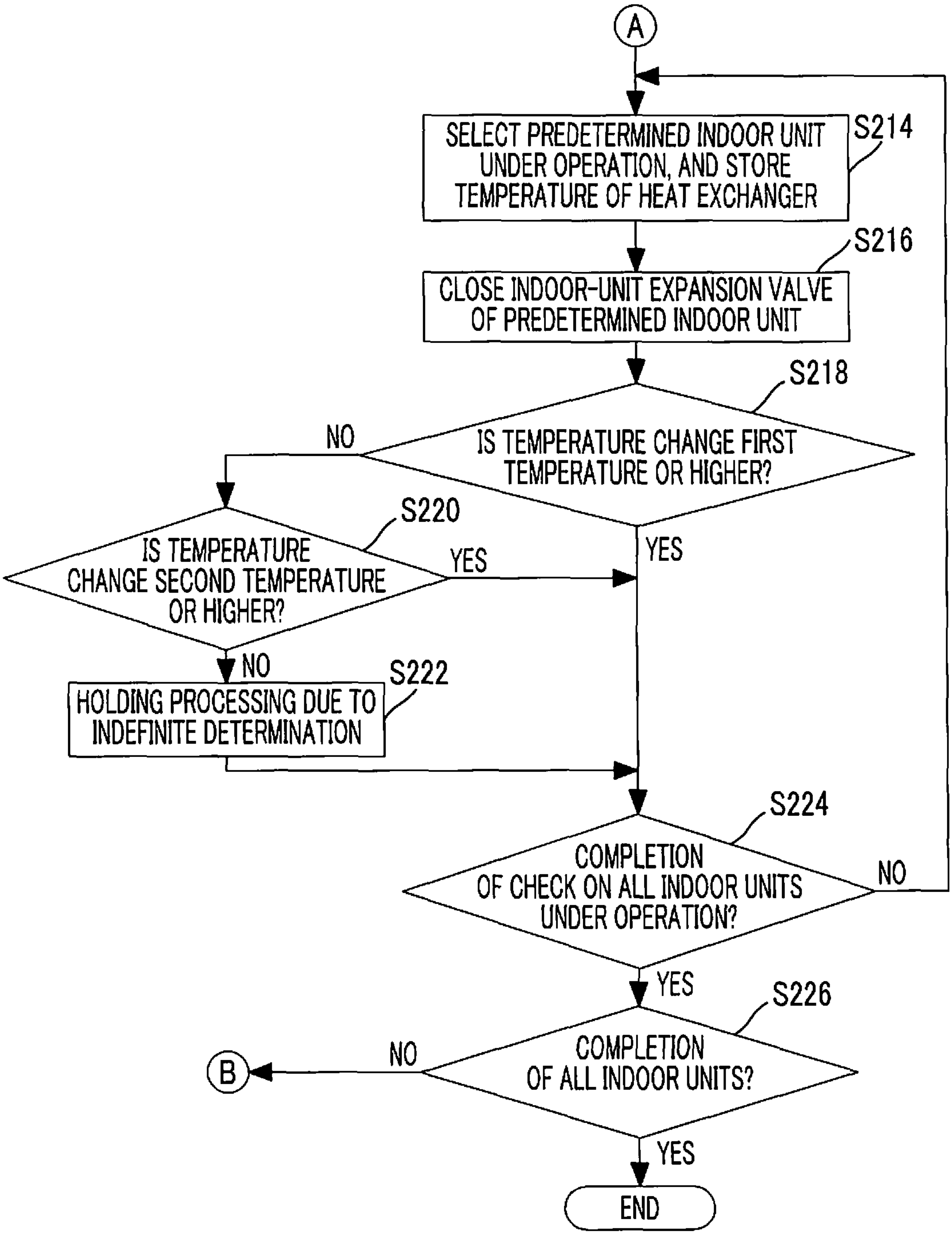
A
SELECT PREDETERMINED INDOOR UNIT UNDER OPERATION, AND STORE TEMPERATURE OF HEAT EXCHANGER
S214
CLOSE INDOOR-UNIT EXPANSION VALVE OF PREDETERMINED INDOOR UNIT
S216
IS TEMPERATURE CHANGE FIRST TEMPERATURE OR HIGHER?
S218
NO
YES
IS TEMPERATURE CHANGE SECOND TEMPERATURE OR HIGHER?
S220
YES
NO
HOLDING PROCESSING DUE TO INDEFINITE DETERMINATION
S222
COMPLETION OF CHECK ON ALL INDOOR UNITS UNDER OPERATION?
S224
NO
YES
COMPLETION OF ALL INDOOR UNITS?
S226
NO
B
YES
END

FIG. 6

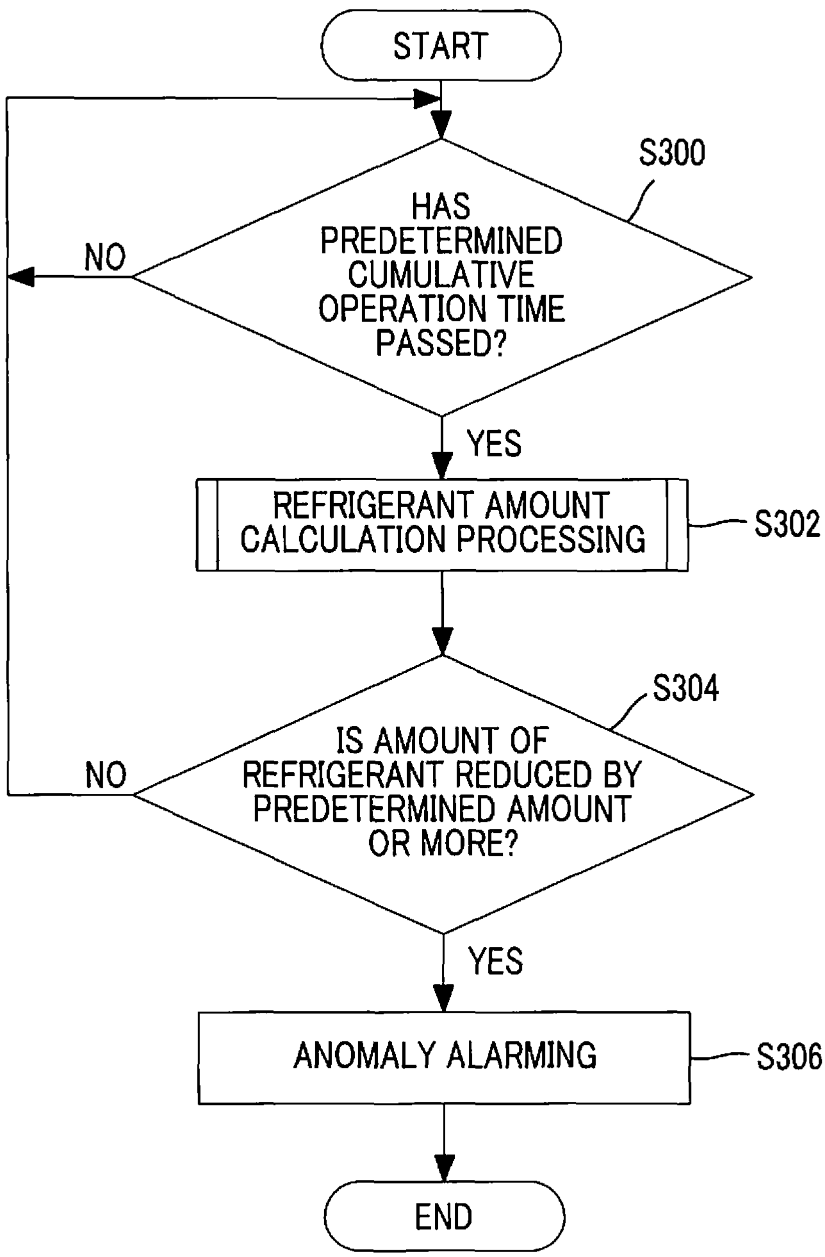
START
S300
HAS PREDETERMINED CUMULATIVE OPERATION TIME PASSED?
NO
YES
REFRIGERANT AMOUNT CALCULATION PROCESSING
S302
S304
IS AMOUNT OF REFRIGERANT REDUCED BY PREDETERMINED AMOUNT OR MORE?
NO
YES
ANOMALY ALARMING
S306
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002349940 A


### Non-patent literature cited in the description


- *TOSHIBA REVIEW,* 2005, vol. 60 (6), 52